(19) Europäisches Patentamt
European Patent Office
Office européen des brevets

(11) EP 3 146 006 B1

(12) EUROPEAN PATENT SPECIFICATION

(45) Date of publication and mention
of the grant of the patent:
**05.01.2022  Bulletin 2022/01**

(21) Application number: **15727516.5**

(22) Date of filing: **20.05.2015**

(51) Int Cl.:
*C09D 103/02* (2006.01)          *C09J 103/02* (2006.01)
*C08L 3/02* (2006.01)

(86) International application number:
**PCT/US2015/031682**

(87) International publication number:
**WO 2015/179470 (26.11.2015 Gazette 2015/47)**

(54) **COATING COMPOSITION**

BESCHICHTUNGSZUSAMMENSETZUNG

COMPOSITION DE REVÊTEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **21.05.2014  EP 14169297
18.11.2014  EP 14193647**

(43) Date of publication of application:
**29.03.2017   Bulletin 2017/13**

(73) Proprietor: **Cargill, Incorporated
Wayzata, MN 55391 (US)**

(72) Inventors:
• **MAKARAINEN, Timo
FI-02610 Espoo (FI)**
• **SIVASLIGIL, Dogan Sahin
B-3990 Overijse (BE)**
• **VOIGT, Andreas
D-45468 Mulheim (DE)**

(74) Representative: **Morariu Radu, Mihai Dorin
Cargill R&D Centre Europe BVBA
Bedrijvenlaan 9
2800 Mechelen (BE)**

(56) References cited:
EP-A1- 1 964 969        EP-A1- 2 642 024
WO-A1-2014/003556     CH-A- 420 838
US-A- 5 037 929          US-A1- 2004 140 584

**Description**

FIELD OF THE INVENTION

The present invention relates to starch-based compositions for use in the production of coating compositions.

BACKGROUND OF THE INVENTION

Coating compositions are used on a number of substrates such as metals, plastics, textiles, and paper. They are used to modify the functional characteristics and aesthetics of these materials. For example, they can be used to protect and to enhance the feel and appearance of the surfaces to which they are applied. They may also be used to improve characteristics such as printability, water resistance, reflectivity and strength.

The exact make-up of a coating composition will depend on its desired end-use and the function it is expected to perform. Typically, paper coating compositions (also known as "coating colours") contain pigments, binders, and thickeners. Binders have traditionally been based on synthetic materials such as latex. These, however, are relatively expensive and do not meet paper manufacturers' growing demand for "green" and more sustainable ingredients. There has therefore been a strong push to replace synthetic binders with more natural ones.

Starch, in particular, has been proposed as a possible alternative to latex. Unfortunately, it has proved difficult to replicate the properties and functionality of latex with starch alone. For example, while they may be able to emulate some of the rheological properties of latex, starch-only compositions do not present good aesthetic characteristics such as gloss or brightness. They may be less easy to handle and apply and, what's more, the use of starch may limit the final dry solid content of the composition (with higher starch concentrations resulting in undesirable increases in viscosity).

Thus, there remains a desire, in the industry, to provide coating compositions which are easy to use, have strong functionality, and which do not rely solely on the use of latex as a binder. The present invention provides such a composition.

STATEMENTS OF THE INVENTION

According to a first aspect of the present invention, there is provided a binder comprising a cold water soluble starch material and a plasticiser.

There is further provided a coating composition comprising such a binder composition.

There is further provided a paper product coated with a coating composition comprising such a binder.

According to another aspect of the present invention, there is provided a method of producing a coating composition, characterized in that it comprises the steps of: providing/selecting a binder composition as defined above; and mixing it with a pigment.

DETAILED DESCRIPTION OF THE INVENTION

Unless specified otherwise, the term "dry substance" as used herein will refer to the non-volatile components of a composition. Thus, for example, stating that a composition "comprises 40% by weight dry substance" will be understood to mean that it comprises 40% non-volatile compounds. In practice, this will usually mean that the composition comprises 60% water. Similarly, stating that the composition comprises 10% of a substance by weight "on a dry weight basis" will mean that, of all the non-volatile components, 10% by weight will consist of the substance in question.

BINDER

The term "binder composition" as used herein may refer to a dry or semi-dry binder composition (i.e. of flowable, particulate or granular solids), or it may refer to an aqueous composition. A dry or semi-dry composition is a composition comprising less than 40% water by weight, based on the total weight of the composition, preferably less than 30%. According to one aspect, the binder composition of the present invention may comprise 5-20% water by weight. An aqueous composition is a composition comprising 40% water, or more, by weight, preferably, 50% or more. The aqueous composition may be in the form of a colloid, a suspension or a solution.

The binder composition of the present invention comprises a cold water soluble starch material together a plasticiser. Unless otherwise made clear by context, the term "a" as used herein will mean "at least one".

STARCH MATERIAL

The binder composition will ideally comprise at least 20% of the cold water soluble starch material by weight, based on total dry weight. More preferably, it will comprise 20-70% more preferably, more preferably 20-60%, more preferably 30-50% of the starch material by weight.

The term "cold water soluble starch material" as used herein refers to any starch material which is capable of partially or fully swelling and/or solubilising in water at ambient temperature (i.e. at 20°C). Preferably, the starch material will have a solubility, at pH 7 and at 20°C, of at least 30% (meaning that at least 30% of the starch material by weight will swell and/or solubilise), more preferably of at least 50%, more preferably of at least 70%, more preferably of at least 80%, more preferably at least 90%, more preferably at least 95% by weight - where solubility is determined according to METHOD 1.

The starch material may be any cold water soluble native starch, starch derivative, or mixture thereof. Starch derivatives include, for example, chemically modified, thermally modified and enzymatically modified starches. They also include depolymerized starch molecules such as dextrins, maltodextrins and pyrodextrins. The starch material may be from any source including, for instance, waxy or dent corn, wheat, tapioca, potato or waxy potato, rice, barley or pea. Advantageously, the starch material will be selected from the group consisting of thinned starches, thermally modified starches, dextrins and mixtures of two or more thereof. The starch material may be subjected to more than one form of modification. Thus, for instance, it may further be esterified, etherified (e.g. hydroxypropylated), or acetylated. Suitable examples of starch materials suitable for use in the present invention could therefore include esterified, etherified, or acetylated thinned starches, esterified, etherified, or acetylated thermally modified starches, and esterified, etherified, or acetylated dextrins. C*iCoat 07520 (available from Cargill) is an example of a starch material which is particularly suitable for use in the present invention.

Instead of or as well as a cold water soluble starch material, the binder composition of the present invention may also comprise a non-cold water soluble starch material (i.e. a starch material that does not meet the criteria for cold water solubility set out above). Such a non-cold water soluble starch material may include, for instance, native starches such as a waxy starch, and/or non-cold water soluble dextrins. If the starch material comprises or consists of one or more non-cold water soluble starches, it will have to be solubilized before or during use (e.g. by heating and/or by the addition of alkali).

PLASTICISER

The term "plasticiser" as used herein will refer to any compound or composition capable of imparting plasticity to the binder composition of the invention - and flexibility to the final product it is used in (e.g. a coating composition).

The plasticiser may also act as a binder and/or a rheology modifier. It has indeed been found that coating compositions comprising a binder composition of the present invention (i.e. including a plasticiser) can match the ACA high shear viscosity (or ACAV Capillary Viscosity - METHOD 2) of coating compositions based solely on latex, and this better than equivalent compositions that do not include a plasticiser (i.e. compositions in which latex has been partially of fully replaced by a cold water soluble starch material alone).

The plasticizer will advantageously be water soluble and, more advantageously, cold water soluble. It will preferably be selected from the group consisting of carbohydrates, polyols, synthetic polymers and/or oligomers, and mixtures of two or more thereof.

Carbohydrates suitable for use as plasticisers will preferably have a DE of 10 to 100, more preferably of 10 to 50, more preferably of 20 to 40. Advantageously, they will be selected from maltodextrin, mono-, di-, tri- or tetrasaccharides, mixtures thereof and/or syrups thereof. For example, the plasticiser may be a monosaccharide such as glucose, a glucose syrup, a sugar (such as sucrose), dextrose, or a starch hydrolysate. Preferably, it will comprise or consist of glucose (e.g. glucose monohydrate) or a glucose syrup.

A polyol is an alcohol containing multiple hydroxyl groups. Examples of polyols suitable for use as a plasticiser include glycol, glycerol, sorbitol, maltitol, and mixtures thereof. Preferably, the plasticiser will comprise or consist of glycerol (in the case of liquid binder compositions) or sorbitol (in the event of dry binder compositions), e.g. anhydrous sorbitol.

Examples of suitable plasticisers include, for instance, a mixture of sorbitol and glucose (or a glucose syrup), a mixture of sorbitol and dextrose, a mixture of sorbitol, dextrose and glucose (or a glucose syrup) - all preferably used in dry binder compositions - or a mixture of glycerol and glucose (or a glucose syrup) - for aqueous binder compositions.

Synthetic polymers and/or oligomers suitable for use as a plasticiser may include, for example, polyethers and polyesters. Preferably, the plasticiser will comprise or consist of polyethylene glycol (PEG).

The plasticiser will preferably be present in the composition of the present invention in an amount of 2-80% more preferably 15-80%, more preferably 30-70%, more preferably 50-60% by weight, based on total dry substance.

The starch material and plasticiser will preferably be present in a weight ratio of of 2:1 to 1:2, more preferably of approximately 1:1. Preferred examples of binder compositions according to the invention include: mixtures of C*iCoat 07520 (or other cold water soluble starch material) with glucose and/or sorbitol, especially in weight ratios of approximately 1:1.

The binder composition of the present invention may be used as a binder in a variety of applications. For instance, it may be used in internal sizing compositions, surface sizing compositions and coating compositions. It may also be used, for example, to replace latex, in full or in part, in carpet backing compositions (also referred to, in the art, as "compound"). Thus, carpet backing compositions comprising a binder as defined above are also disclosed herein. They will typically comprise the binder and filler, together with one or more optional additives. Advantageously, it will be used in coating compositions,

COATING COMPOSITION

Coating compositions are typically used to enhance the feel, appearance and/or functionality of a substrate. Preferably, the coating composition will be a paper coating composition (also known as "coating color"). It will advantageously comprise at least 50% dry substance by weight, more preferably 50-80%.
In addition to a binder composition as defined above, coating compositions will also comprise a pigment. Examples of suitable pigments include clays such as structured and calcined clays, hydrated aluminum silicates (such as kaolin clay), bentonite, natural and synthetic calcium carbonate, calcium sulphate (gypsum), silicas, precipitated silicas, titanium dioxide, alumina, aluminium trihydrate, plastic (polystyrene) pigments, satin white, talc, barium sulphate, zinc oxide and mixtures of two or more thereof. The appropriate pigment will readily be selected by a skilled person depending on the type of coating composition being produced.
The coating composition will preferably comprise 1-20 parts, more preferably 2-10 parts by weight, on a dry weight basis, binder composition to 100 parts pigment. It will ideally have a Brookfield viscosity of 200-3000 mPas (determined according to METHOD 4).

ADDITIVES

The binder composition of the present invention, or indeed a coating composition produced therewith, may also comprise one or more additives. Examples of possible additives, if used, may include: thickeners (such as cellulose ethers, alginates, gums such as xanthan gum, native or modified starches, and synthetic polymers), synthetic binders (such as styrene butadiene, styrene acrylate, vinyl polymer based latexes, and polyvinyl alcohol), surfactants (such as cationic surfactants, anionic surfactants, non-ionic surfactants, amphoteric surfactants and fluorinated surfactants), hardeners (such as active halogen compounds, vinylsulfone compounds and epoxy compounds), dispersing agents (such as polyacrylates, polyphosphates, and polycarboxylates), flowability improvers, lubricants (such as calcium, ammonium and zinc stearate, wax or wax emulsions, alkyl ketene dimer, and glycols), antifoamers (such as octyl alcohol and silicone-based antifoamers), releasing agents, foaming agents, penetrants, optical brighteners (such as fluorescent whiteners), preservatives (such as benzisothiazolone and isothiazolone compounds), biocides (such as metaborate, thiocyanate, and sodium benzoate), yellowing inhibitors (such as sodium hydroxymethyl sulfonate, and sodium p-toluenesulfonate), ultraviolet absorbers (such as benzotriazole compounds having a hydroxy-dialkylphenyl group at the 2 position), antioxidants (such as sterically hindered phenol compounds), insolubilisers, antistatic agents, pH regulators (such as sodium hydroxide, sulfuric acid and hydrochloric acid), water-resisting agents (such as ketone resin, anionic latex, and glyoxal), wet and/or dry strengthening agents (such as glyoxal based resins, oxidised polyethylenes, melamine resins, urea formaldehyde), cross-linking agents, gloss-ink holdout additives, grease and oil resistance additives, leveling and evening aids (such as polyethylene emulsions, and alcohol/ethylene oxide), and mixtures of two or more thereof. The amount of each of these compounds to be added, if at all, will be determined in accordance with standard practice and with the desired properties of the particular coating composition being produced.
Advantageously, binder compositions of the present invention can be used to replace, in whole or in part, the use of synthetic binders such as latex. Thus, binder compositions of the invention can be used to replace 10% or more, preferably 20% or more, preferably 30% or more, preferably 40% or more, preferably 50% or more, preferably 60% or more, preferably 70% or more of a synthetic binder by weight, on a dry weight basis. Accordingly, the binder composition of the present invention may comprise a cold water soluble starch material, a plasticiser (such as glucose and/or glycerol), and a synthetic binder (such as latex). The cold water starch material and synthetic binder may be present, on a dry weight basis, in a ratio of of 20:80 to 70:30, more preferably 30:70 to 50:50.

METHOD OF PREPARATION

The present invention provides a method of producing a coating composition simply by mixing a binder composition as defined above with a pigment. The final coating composition (ready for use) will be an aqueous composition. Thus, both the binder composition and the pigment may be pre-dispersed in water prior to mixing or the dry ingredients may be pre-mixed before being dispersed in water. Alternatively, only the binder composition or the pigment may be pre-dispersed in water and then mixed with the remaining dry ingredients. Once the binder composition and pigment have been mixed (in whichever form), water (or further water) may be added to achieve the desired dry solid content of the final coating composition. Additional ingredients such as those additives described above may be incorporated at any point, based on common practice in the art.

The method of the present invention may also include the step of preparing the binder composition. As noted above, the binder composition may include a non-cold water soluble starch. In that case, the binder composition will preferably be treated to cause solubilisation of the starch material. This solubilisation step may be performed prior to, during or after mixing with the pigment and any other ingredients.

Solubilisation may be achieved, for instance, by cooking, heat treatment, pregelatinisation, by treatment with an alkali, or by any other means known in the art. By way of illustration only, cooking may be performed either in batch at about 95-98°C of by jet-cooking at about 130°C. The particular cooking conditions required to solubilize a particular starch material will readily be determined by a person skilled in the art based on the type and quantity of starch to be solubilized and on the required degree of solubility.

If necessary, the plasticiser may also be mixed with water and solubilised, e.g. by heating, before addition to the other ingredients.

Coating of paper products can be carried out on the sheet-forming machine or on a separate coating machine. Methods of applying coating compositions to paper products are well known in the art. They include, for example, air knife coating, rod coating, bar coating, wire bar coating, spray coating, brush coating, cast coating, flexible blade coating, gravure coating, jet applicator coating, short dwell coating, slide hopper coating, curtain coating, flexographic coating, size-press coating, reverse roll coating and transfer roll coating (metered size press or gate roll coating). After the coating composition has been applied, any excess is preferably removed. The paper is then dried and optionally calendered to improve surface smoothness and gloss and to reduce bulk.

Thus, the present invention also provides paper products produced with the binder composition or coating composition as defined herein, and methods of manufacturing them. The term "paper product" as used herein refers to sheet material of any thickness, including, for example, paperboard, cardboard and corrugated board. Depending on its intended end use, paper products of the present invention may be coated on only one side or on both sides. Each side may be coated only once or a plurality of times, provided that at least one of the coatings is in accordance with the present invention. By way of example, a premium coated paper will typically include a pre-coat, middle-coat and top-coat.

The advantage of the binder composition of the present invention, as already noted above, is that it can be used to replace, in whole or in part, the use of synthetic binders such as latex in paper coating compositions without adversely affecting rheology (ACA high shear viscosity in particular), or paper gloss (as determined, e.g. according to METHOD 3).

The present invention will now be described in more detail by way of the following non-limiting examples.

Examples

Coating compositions were prepared with the ingredients as shown in Table 1, where Thor G is a 1:1 blend of C*iCoat 07520 from Cargill and D-glucose monohydrate from Fluka (with at least 98% purity with a dry substance of 92.2% by weight), and Thor S is a 1:1 blend of C*iCoat 07520 from Cargill and anhydrous sorbitol from Sigma (with at least 98% purity a dry substance of 96.5% by weight). Both Thor G and Thor S were prepared by simple mechanical mixing.

| TABLE 1 | Sample no. | Sample 1 (reference ) | Sample 2 | Sample 3 | Top Coat |
|---|---|---|---|---|---|
| **formulation** | | | | | |
| *pigments* | | | | | |
| HC 60 (ground CC*) | parts dry | 100 | 100 | 100 | |
| HC90 (fine ground CC*) | parts dry | | | | 75 |
| Hydragloss 90 | parts dry | | | | 25 |
| *binder* | | | | | |
| Litex PX 9340 (latex) | parts dry | 12.2 | 6 | 6 | |
| Basonal 2119.02 (latex) | parts dry | | | | 13 |
| Thor G (92,2%) | parts dry | | 6.5 | | |
| Thor S (96,5%) | parts dry | | | 6.5 | |

(continued)

| TABLE 1 | Sample no. | Sample 1 (reference ) | Sample 2 | Sample 3 | Top Coat |
|---|---|---|---|---|---|
| *additives* | | | | | |
| PVOH 6-98 | parts dry | | | | 0.70 |
| CMC FinnFix 30 | parts dry | 0.46 | 0.65 | 0.65 | 0.32 |
| Sterocoll FS | parts dry | 0.15 | 0.15 | 0.15 | |
| Blankophor PF1 | parts dry | | | | 0.60 |
| Coating colour data | | | | | |
| dry solids | % | 65.1 | 64.9 | 65.0 | 65.0 |
| pH | | 9.0 | 9.0 | 9.0 | 9.0 |
| Brookfield viscosity 100rpm | mPa.s | 1506 | 1462 | 1542 | 1286 |
| ACAV viscosity at 1.000.000 1/s | mPa.s | 28.6 | 40.9 | 40.0 | - |
| WRV | $g/m^2$ | 106 | 78 | 76 | 124 |
| **Coater** | Sumet | | | | |
| **Base paper** | UPM Nordland 77 $g/m^2$ | | | | precoated |
| Coat weight per side | $g/m^2$ | 10 | | | 11 |
| Calandering | | | | | Std. parameter + 2 nips |
| **Paper tests only on one side** | | | | | |
| grammage | $g/m^2$ | 113 | 115 | 115 | |
| Gloss Gardner 75° | % | 59.0 | 59.1 | 59.0 | |
| *CC = calcium carbonate | | | | | |

The pigment was added to water, at room temperature, in a beaker. If being used (Samples 2 and 3 only) Thor G or Thor S was then added. The mixture is then stirred, at high speed, for 20 minutes. Stirring speed was then reduced to prevent excess air from being incorporated into the mixture. The latex was then added, followed by any remaining ingredients, with continuous stirring. After approximately 5 minutes of mixing, water was added to reach the desired dry solids content (of approximately 65% by weight). If necessary, the pH was also adjusted to approximately pH 9.

Brookfield viscosity, ACAV viscosity and Water Release Value were measured according to Methods 4, 2, and 5 below, respectively. The results are shown in Table 1.

Each pre-coat (Samples 1-3) was then coated onto paper, together with the Top Coat. Coating conditions as used with the Sumet coater are set out in Table 2.

| TABLE 2 | Pre-coat | Top-coat |
|---|---|---|
| Roll pressure | 200N | |
| Rod pressure | 60N | |
| Drying temperature | 100°C | |
| Drying time | 1 min | |
| IR dryer (3) Power | 100% | |
| Applicator speed | 15 m/min | |
| Rod diameter | 0.25 mm | 0.35 mm |

(continued)

| TABLE 2 | Pre-coat | Top-coat |
|---|---|---|
| Wet film thickness | 28 μm | 40 μm |

The resulting double coated papers were then assessed for gloss (Gloss Gardener 75° - Method 3, below). The results are presented in Table 1.

Conclusions: in terms of handling and ease of application, coating compositions according to the present invention present very similar characteristics (e.g. viscosity) to traditional latex-based coating compositions. What's more, it's believed that the properties of the coating compositions according to the invention could be further improved, e.g. simply by reducing CMC content. In terms of gloss, papers coated with at least one coating composition according to the present invention (in this case, the pre-coat) perform as well as papers coated with comparable latex-bases compositions.

Methods

Method 1 - Cold Water Solubility

Determine the percent dry substance (DS) of a sample by drying 5g for 4 hours at 120°C under vacuum.

Weigh 2g of sample and transfer to a dry 200ml Kohlrausch flask. Partially fill with water at 25°C. Shake vigorously until completely in suspension and dilute to volume. Stopper flask and shake gently while submerged in a water bath at 25°C for a total agitation time of 1 hour.

Filter through a Whatman No. 2V paper, returning the first portion of filtrate. Measure 50ml of filtrate and transfer to a weighed evaporating dish.

Evaporate to dryness on a steam bath and dry in a vacuum oven for 1 hour at 100°C. Cool in a desiccator and weigh to the nearest mg.

$$DS, \% = 100 - [(\text{loss in weight, g} \times 100) / (\text{sample weight, g})]$$

$$\text{Solubles, } \% = (\text{residue weight, g} \times 100) / [0.25 \times \text{sample weight, g} \times (DS, \% / 100)]$$

Method 2 - ACAV Capillary Viscosity

Principle: the sample is forced through capillaries at high pressure, using a piston driven mechanism.

$$\text{Apparatus: ACAV A2 Viscometer (capillary): capillary} = 160 \mu m \text{ (wire); slit} = 50 \mu m \text{ (wire)}.$$

Prior to measurement, samples were degassed and heated to 30°C.

Manufacturer's instructions are followed to measure viscosity at 350, 300, 260, 160, 120, 80, 50, and 20 bar.

Method 3 - Gardner Paper Gloss 75°

This test is performed according to DIN 67530.

Method 4 - Brookfield viscosity

The sample is placed in a 600 ml glass beaker (wide design) and the temperature is adjusted to 20°C. Depending on the viscosity of the sample, a spindle is selected according to manufacturer's instructions and fixed carefully on a Brookfield Viscometer DV-II+ (for the sake of the present samples, a no. 4 spindle was generally considered appropriate). The glass beaker is then placed on the viscometer (set at 100 rpm), checking that the spindle is at least partially covered by the sample. Manufacturer's instructions are followed to measure the viscosity of the sample.

Method 5 - AA-GWR Water Release Test

AA - GWR WRV apparatus

Syringe (10mL)
Thermometer
Filter paper (blue ribbon)
Millipore filter (5μm pore size)
Balance (sensibility: 0,001g)

Both control levers - "Pressure" and "Cylinder" - have to be in the "off' position (downwards). At least three filter papers should be weighed and the figure logged (weight 1). The filter paperss have to be placed on the rubberized plate and the Millipore filter is then placed on the filter papers with the shiny side up. Then the cylinder is placed on the plate with the ceiling upwards. The whole composition is put on the metal plate and risen up by switching the "Cylinder" lever. The sample is tempered to 30°C and 10 ml of the coating composition is filled into the cylinder with a syringe. The rubber should be free from coating composition to avoid leakage. The device has to be closed with the plug and the pressure is switched on with the "Pressure" lever and adjusted to 1 bar. At the same time the stop-watch is started. After two minutes, the pressure is stopped and the cylinder let down. The whole composition - plate, filters and cylinder - is removed and turned over a wash-basin and the filter paper is taken and weighed. This gives weight 2. Water release value is calculated as follows: WRV [g/m2] = (weight 2 - weight 1) * 1250.

## Claims

1. A binder composition for use in paper coating compositions comprising a cold water soluble starch material and a plasticizer **characterized in that** the starch material is present in an amount of between 20% and 70% by weight, based on total dry substance, wherein the starch material is selected from the group consisting of thinned starches, thermally modified starches, dextrins, and mixtures of two or more thereof, wherein the percent dry substance is determined by drying 5 grams of a sample for 4 hours at 120°C under vacuum and wherein the plasticizer is selected from carbohydrates having a DE of at least 10, polyols, synthetic polymers, synthetic oligomers and mixtures of two or more thereof.

2. A binder composition according to any one of the preceding claims, **characterized in that** the plasticiser is selected from the group consisting of glucose, glucose syrups, dextrose, glycerol, sorbitol, maltitol, and mixtures of two or more thereof.

3. A binder composition according to any one of the preceding claims, **characterized in that** the starch material has a solubility, at pH 7 and 20°C, of at least 30%.

4. A method of producing a paper coating composition, **characterized in that** it comprises the steps of: providing a binder composition according to any one of claims 1 to 3; and mixing the binder composition with a pigment.

5. A method according to claim 4, **characterized in that** the step of providing the binder composition comprises mixing a non-cold water soluble starch material with water; solubilizing the starch material; and adding a plasticiser, wherein the step of adding the plasticiser can occur before, during or after the solubilization step.

6. A method according to claim 4, **characterized in that** the step of solubilizing the starch material comprises heating the aqueous solution at least until the gelatinization temperature of the starch, e.g. by jet cooking.

## Patentansprüche

1. Bindemittelzusammensetzung zur Verwendung in Papierbeschichtungszusammensetzungen, umfassend ein kaltwasserlösliches Stärkematerial und einen Weichmacher, **dadurch gekennzeichnet, dass** das Stärkematerial in einer Menge zwischen 20 Gew.-% und 70 Gew.-%, bezogen auf die Gesamttrockensubstanz, vorhanden ist, wobei das Stärkematerial ausgewählt ist aus der Gruppe bestehend aus verdünnten Stärken, thermisch modifizierten Stärken, Dextrinen und Mischungen aus zwei oder mehreren davon, wobei der Prozentsatz der Trockensubstanz durch Trocknen von 5 Gramm einer Probe für 4 Stunden bei 120 °C unter Vakuum ermittelt wird und wobei der Weichmacher ausgewählt ist aus Kohlenhydraten mit einem DE von mindestens 10, Polyolen, synthetischen Polymeren, synthetischen Oligomeren und Mischungen aus zwei oder mehreren davon.

2. Bindemittelzusammensetzung nach einem der vorstehenden Ansprüche, **dadurch gekennzeichnet, dass** der Weichmacher ausgewählt ist aus der Gruppe bestehend aus Glucose, Glucosesirupen, Dextrose, Glycerin, Sorbit, Maltit und Mischungen aus zwei oder mehreren davon.

3. Bindemittelzusammensetzung nach einem der vorstehenden Ansprüche, **dadurch gekennzeichnet, dass** das Stärkematerial bei pH 7 und 20 °C eine Löslichkeit von mindestens 30 % aufweist.

4. Verfahren zur Herstellung einer Papierbeschichtungszusammensetzung, **dadurch gekennzeichnet, dass** es die folgenden Schritte umfasst: Bereitstellen einer Bindemittelzusammensetzung nach einem der Ansprüche 1 bis 3; und Mischen der Bindemittelzusammensetzung mit einem Pigment.

5. Verfahren nach Anspruch 4, **dadurch gekennzeichnet, dass** der Schritt des Bereitstellens der Bindemittelzusammensetzung das Mischen eines nicht in kaltem Wasser löslichen Stärkematerials mit Wasser umfasst; Auflösen des Stärkematerials; und Zugeben eines Weichmachers, wobei der Schritt des Zugebens des Weichmachers vor, während oder nach dem Auflöseschritt erfolgen kann.

6. Verfahren nach Anspruch 4, **dadurch gekennzeichnet, dass** der Schritt des Löslichmachens des Stärkematerials das Erhitzen der wässrigen Lösung zumindest bis zur Gelatinierungstemperatur der Stärke, z.B. durch Strahlkochen, umfasst.

## Revendications

1. Composition de liant pour utilisation dans des compositions de revêtement de papier comprenant un matériau d'amidon soluble dans l'eau froide et un plastifiant **caractérisée en ce que** le matériau d'amidon est présent en une quantité comprise entre 20 % et 70 % en poids, sur la base de substance sèche totale, dans laquelle le matériau d'amidon est choisi dans le groupe constitué d'amidons dilués, amidons thermiquement modifiés, dextrines, et des mélanges de deux de ceux-ci ou plus, dans laquelle le pourcentage de substance sèche est déterminé en séchant 5 grammes d'un échantillon pendant 4 heures à 120 °C sous vide et dans laquelle le plastifiant est choisi parmi des glucides ayant un DE d'au moins 10, des polyols, des polymères synthétiques, des oligomères synthétiques et des mélanges de deux de ceux-ci ou plus.

2. Composition de liant selon l'une quelconque des revendications précédentes, **caractérisée en ce que** le plastifiant est choisi dans le groupe constitué de glucose, sirops de glucose, dextrose, glycérol, sorbitol, maltitol, et des mélanges de deux de ceux-ci ou plus.

3. Composition de liant selon l'une quelconque des revendications précédentes, **caractérisée en ce que** le matériau d'amidon a une solubilité, à pH 7 et à 20 °C, d'au moins 30 %.

4. Procédé de production d'une composition de revêtement de papier, **caractérisé en ce qu'il** comprend les étapes consistant à : fournir une composition de liant selon l'une quelconque des revendications 1 à 3 ; et mélanger la composition de liant avec un pigment.

5. Procédé selon la revendication 4, **caractérisé en ce que** l'étape de fourniture de la composition de liant comprend le mélange d'un matériau d'amidon non soluble dans l'eau froide avec de l'eau ; la solubilisation du matériau d'amidon ; et l'ajout d'un plastifiant, dans lequel l'étape d'ajout du plastifiant peut se produire avant, pendant ou après l'étape de solubilisation.

6. Procédé selon la revendication 4, **caractérisé en ce que** l'étape de solubilisation du matériau d'amidon comprend le chauffage de la solution aqueuse au moins jusqu'à la température de gélatinisation de l'amidon, par exemple par cuisson par jet.